# EUROPÄISCHE PATENTANMELDUNG

(11) **EP 0 876 938 A1**
(43) Veröffentlichungstag der Anmeldung: **11.11.1998**
(21) Anmeldenummer: 98105167.5
(22) Anmeldetag: 21.03.1998
(51) Int. Cl.: B60N 2/36

(54) **Crash-Verriegelung**

(30) Priorität: 09.05.1997 DE 19719202
(71) Anmelder: Kochendörfer & Kiep Metallverarbeitung GmbH, 65830 Kriftel (DE)
(72) Erfinder: Dietz, Horst, 67727 Lohnsfeld (DE); Ehrhardt, Jürgen, 65795 Hattersheim (DE); Faupel, Rolf, 65830 Kriftel (DE)
(74) Vertreter: KEIL & SCHAAFHAUSEN Patentanwälte

(57) **Zusammenfassung**

Es wird eine Crash-Verriegelung, insbesondere für umklappbare Rückenlehnen (2) von Kraftfahrzeugen beschrieben, wobei die Rückenlehne an ihren oberen freien Seitenabschnitten lösbar an den Fahrzeugseitenwänden verriegelbar ist und wenigstens eine die Rückenlehne (2) tragende Halteleiste (3) aufweist, die über einen Lagerbock (4) oder dgl. an dem Fahrzeugboden (5) befestigt und mit der Rückenlehne (2) um eine Schwenkachse (6) gelenkig gegenüber dem Lager (4) verschwenkbar ist. Ein ungewolltes Umklappen der Rückenlehne (2) wird auf einfache Weise zuverlässig dadurch vermieden, daß an dem Lagerbock (4) Laufschalen (10a,b) vorgesehen sind, in denen eine Rolle (13) verschiebbar aufgenommen ist, daß die Rolle (13) sich bei einer Bewegungsänderung des Fahrzeugs aufgrund der Fliehkraft innerhalb der Laufschalen (10a,b) verschiebt, und daß der Abstand zwischen der Halteleiste (3) und den Laufschalen (10a,b) so gewählt ist, daß die Halteleiste (3) im Ruhezustand an der Rolle (13) vorbeischwenken kann und daß die Halteleiste (3) mit einer Bodenfläche (15) an der Rolle anschlägt, wenn die Rolle (13) in den Laufschalen (10a,b) aus ihrer Ruheposition verschoben ist.

## Beschreibung

Die Erfindung betrifft eine Crash-Verriegelung, insbesondere für umklappbare Rückenlehnen von Kraftfahrzeugen, wobei die Rückenlehne an ihren oberen freien Seitenabschnitten lösbar an den Fahrzeugseitenwänden verriegelbar ist und wenigstens eine die Rückenlehne tragende Halteleiste aufweist, die über einen Lagerbock oder dgl. an dem Fahrzeugboden befestigt und mit der Rückenlehne um eine Schwenkachse gelenkig gegenüber dem Lagerbock verschwenkbar ist.

Bei immer mehr Kraftfahrzeugen, insbesondere Kombis aber auch Kleinwagen, ist es möglich, die Rückenlehne umzulegen, um den Kofferraum zu vergrößern. Hierzu werden an den oberen Seitenabschnitten der Rückenlehne vorgesehene Verriegelungen, über die die Rückenlehne mit den Fahrzeugseitenwänden verbunden ist, gelöst, so daß die Rückenlehne über an ihrem unteren Ende vorgesehene Gelenke nach vorne verschwenkt werden kann. Die Verriegelungen gegenüber den Fahrzeugseitenwänden reichen üblicherweise aus, um beim Bremsen ein ungewolltes Umklappen der Rückenlehne zu verhindern. Kommt es jedoch zu einem Unfall (crash) und ist insbesondere viel Gepäck im Kofferraum, das aufgrund der Trägheitskräfte nach vorne drückt, so reichen die Seitenwandverriegelungen möglicherweise nicht mehr aus, um die Rückenlehne in ihrer vertikalen Position zu halten. Ein ungewolltes Umklappen der Rückenlehne birgt jedoch erhebliche Verletzungsrisiken für die Fahrzeuginsassen.

Es wurden daher bereits Crash-Verriegelungen vorgeschlagen, die zusätzlich zu den Seitenwandverriegelungen ein Umklappen der Rückenlehne verhindern sollen. Sie sind am unteren Ende der Rückenlehne vorgesehen und über Bowdenzüge mit den Seitenwandverriegelungen gekoppelt, so daß sie gleichzeitig mit diesen gelöst werden können, wenn die Rückenlehne umgeklappt werden soll. Eine derartige Konstruktion erfordert jedoch viele Teile und ist daher in der Herstellung und Montage aufwendig und teuer.

Es wurde ferner bereits vorgeschlagen, die Halteleisten für eine Crash-Verriegelung zu nutzen. Hierbei ist die Halteleiste an einem Hebel schwenkbar gelagert, der wiederum über einen Bolzen schwenkbar mit dem Lagerbock verbunden ist. Im Crashfall bewegt die Halteleiste den Hebel nach vorne, so daß dieser einen Sicherungssplint abschert. Dadurch kann sich eine an einer dritten Achse schwenkbar gelagerte Verzahnung nach oben bewegen und in eine entsprechende Verzahnung an der Unterseite der Halteleiste eingreifen und diese verriegeln. Abgesehen von dem komplizierten Aufbau hat sich diese Lösung jedoch in der Praxis als nicht ausreichend zuverlässig erwiesen. Auch ist unklar, was mit dem abgescherten Splint geschieht, so daß dieser ggf. die Verriegelung stört.

Aufgabe der Erfindung ist es daher, eine einfache und zuverlässige Crash-Verriegelung zu schaffen, die ein ungewolltes Umklappen der Rückenlehne verhindert.

Diese Aufgabe wird mit der Erfindung im wesentlichen dadurch gelöst, daß an dem Lagerbock Laufschalen vorgesehen sind, in denen eine Rolle verschiebbar aufgenommen ist, daß die Rolle sich bei einer Bewegungsänderung des Fahrzeugs aufgrund der Massenträgheit innerhalb der Laufschalen verschiebt, und daß der Abstand zwischen der Halteleiste und den Laufschalen so gewählt ist, daß die Halteleiste im Ruhezustand an der Rolle vorbeischwenken kann und daß die Halteleiste mit einer Bodenfläche an der Rolle anschlägt, wenn die Rolle in den Laufschalen aus ihrer Ruheposition verschoben ist.

Bei stehendem oder sich stetig fortbewegendem Fahrzeug läßt sich die Halteleiste mit der Rückenlehne nach Lösen der oberen Seitenwandverriegelung somit ohne weiteres umlegen, da die am tiefsten Punkt der Laufschalen angeordnete Rolle die Bewegung der Halteleiste nicht stört. Kommt es jedoch zu einer abrupten Bewegungsänderung des Fahrzeugs, insbesondere beim Crash, so verschiebt sich die Rolle aufgrund der Massenträgheit in den Laufschalen nach vorne, bzw. bei einem Heck-Crash nach hinten, so daß sich die Halteleiste nicht mehr an der Rolle vorbeischwenken läßt, sondern mit ihrer Bodenfläche an der Rolle anschlägt. Somit wird das ungewollte Umklappen der Halteleiste blockiert. Hat die Wucht des Crashes nicht zu einer erheblichen Verformung der Rückbank-Befestigung geführt, so läßt sich nach Stillstand des Fahrzeugs durch Zurückschieben der Rolle problemlos wieder der Ursprungszustand herstellen, in welchem die Rückenlehne ohne Blockade durch die Rolle umschwenkbar ist.

Um den bei einem Crash auftretenden Belastungen standzuhalten, ist die Rolle vorzugsweise aus gehärtetem Stahl ausgebildet.

Gemäß einer bevorzugten Ausgestaltung der Erfindung haben die Laufschalen eine konkave Lauffläche, auf der die Rolle verschiebbar ist, wobei die Lauffläche vorzugsweise eine stärkere Krümmung aufweist als die bei einem Verschwenken der Halteleiste von der Bodenfläche der Halteleiste zurückgelegte Kreisbahn. Dadurch wird gewährleistet, daß die Rolle sich bei einer Verschiebung innerhalb der Laufbahn automatisch derart der Bodenfläche der Halteleiste annähert, daß diese an der Rolle anschlägt und gegen ein Umklappen verriegelt wird.

Eine Fixierung der Rolle in der ausgelenkten Blockadestellung wird dadurch unterstützt, daß in der Bodenfläche der Halteleiste Verformungsnasen zur Aufnahme der Rolle in ihrer ausgelenkten Position ausgebildet sind.

In Weiterbildung der Erfindung ist die Halteleiste zweischenklig ausgebildet und umgreift eine Verstärkung mit Halteleistenschenkeln beidseitig. Die Verstärkung kann dann vorteilhaft dafür genutzt werden, die Rolle in einer Formfreimachung zu führen, so daß ein definierter Verschiebeweg der Rolle festgelegt wird. Hierbei wird durch Aufnahme der Rolle in der Verstärkungsausnehmung gleichzeitig ein Herausfallen der Rolle aus den Laufschalen verhindert. Ferner erhält das Gesamtsystem durch die Verstärkung zusätzliche Festigkeit, da sie die Systembreite des Lagerbocks festlegt.

Im Crash-Fall gibt die Verstärkung zusätzlich die Verformungsrichtung der Halteleiste relativ zu der Rolle vor, wobei dies durch einen im Bereich der Schwenkachse an der Verstärkung ausgebildeten Verformungsfreischnitt unterstützt wird.

Erfindungsgemäß ist auch der Lagerbock zweischenklig ausgebildet und umgreift die Halteleiste und die Laufschalen beidseitig mit Lagerschenkeln. Über die Lagerschenkel können die Stirnseiten der Rolle geführt und so eine Schiefstellung verhindert werden.

Um im Crash-Fall eine sichere Verriegelung der Halteleiste zu erreichen, sind zusätzlich zu dem Freischnitt an der Verstärkung Verformungsfreimachungen in den Lagerschenkeln vorgesehen, die die Deformationsrichtung des Systems vorgeben.

Eine definierte Lage der einzelnen Komponenten der Crash-Verriegelung wird erfindungsgemäß dadurch erreicht, daß die Lagerschenkel über Befestigungsbolzen miteinander verbunden sind, die die Laufschalen und die Verstärkung tragen. Die insbesondere genieteten Befestigungsbolzen verspannen hierbei die Lagerschenkel, Laufschalen und Verstärkung. Auch die Schwenkachse kann durch einen durchgehenden Bolzen gebildet werden, der die Lagerschenkel miteinander verbindet.

Weiterbildungen, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine schematische Darstellung der erfindungsgemäßen Crash-Verriegelung im Ruhezustand,
- Fig. 2: eine Darstellung ähnlich der in Fig. 1, wobei das Umlegen der Rückenlehne im Normalbetrieb verdeutlicht wird,
- Fig. 3: eine vergrößerte Darstellung ähnlich denen in Fig. 1 und 2 zur Verdeutlichung der Abläufe bei einem Crash-Impuls,
- Fig. 4: eine vergrößerte Darstellung der Crash-Verriegelung nach einem Crash und
- Fig. 5: eine teilweise geschnittene Vorderansicht der Crash-Verriegelung.

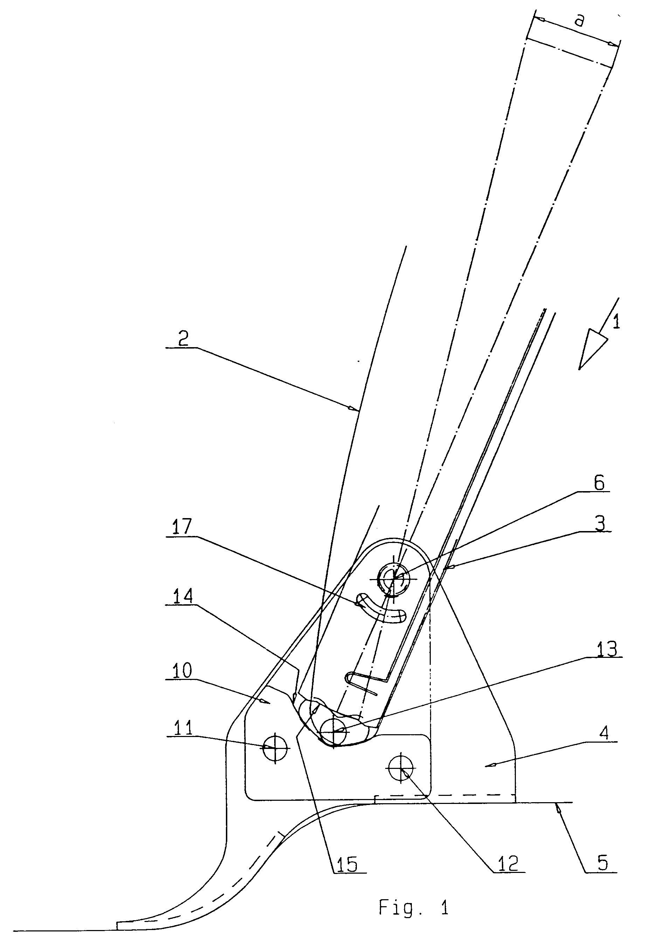

In der Zeichnung ist schematisch eine Crash-Verriegelung 1 für eine umklappbare Rückenlehne 2 eines Kraftfahrzeugs dargestellt. Die Rückenlehne 2 ist in hier nicht dargestellter Weise an ihren oberen freien Seitenabschnitten lösbar an den Fahrzeugseitenwänden verriegelbar. Zudem kann vorgesehen sein, daß die Rückenlehne 2 in verschiedenen Vertikalstellungen arretiert wird, wobei der Verstellweg a in Fig. 1 schematisch angedeutet ist.

Die Rückenlehne 2 ist an ihrer Unterseite über eine Halteleiste 3 mit einem Lagerbock 4 verbunden, der am Fahrzeugboden 5 durch Verschrauben, Schweißen oder eine ähnliche Befestigungsart befestigt ist und durch hier nicht dargestellte Sicken verstärkt sein kann.

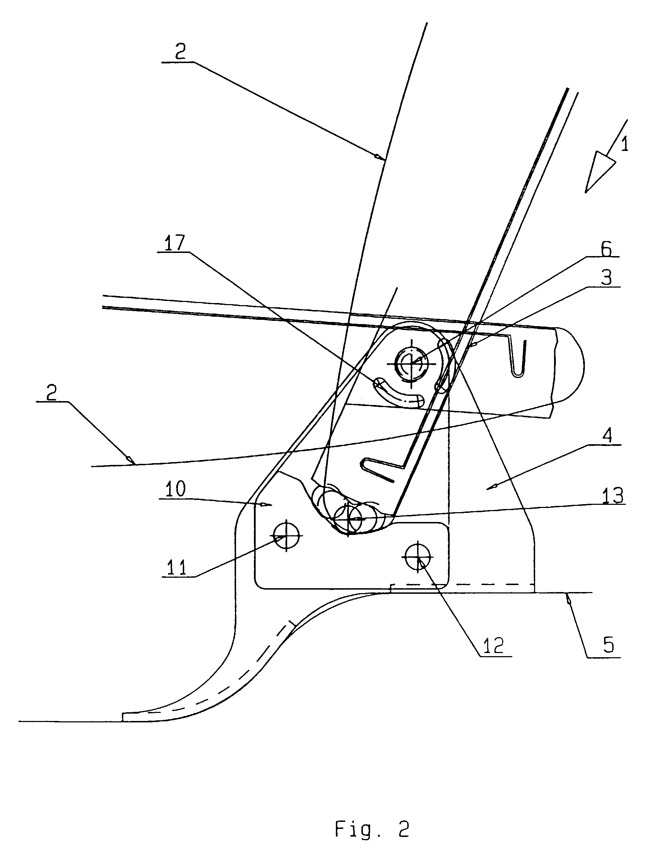

Beim Umlegen der Rückenlehne 2 wird diese mit der Halteleiste 3 um eine Schwenkachse 6 in die in Fig. 2 angedeutete umgelegte Position verschwenkt.

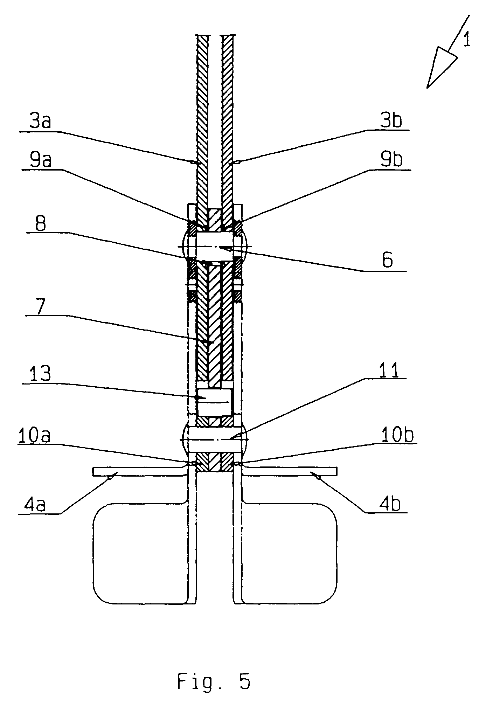

Die Schwenkachse 6 ist als durchgehender Bolzen zwischen zwei Schenkeln 4a, 4b des Lagerbocks 4 ausgebildet. Die Lagerung der Halteleiste 3 auf der Schwenkachse 6 läßt sich am besten in Fig. 5 erkennen. Die Halteleiste 3 ist bei der dargestellten Ausführungsform zweischenklig ausgebildet, wobei zwischen den Schenkeln 3a, 3b eine Verstärkung 7 angeordnet ist, die auch die Schwenkachse 6 umgreift und im Bereich der Schwenkachse 6 einen Freischnitt 8 aufweist, der bei einer Verformung des Lagerbocks 4 ein Blockieren durch die Verstärkung 7 verhindert. Durchstellungen 9a,b an den Halteleistenschenkeln 3a,b sollen eine weitgehende Spielfreiheit und Leichtgängigkeit des Systems gewährleisten.

Unterhalb der Halteleiste 3 und der Verstärkung 7 sind zwischen Lagerschenkeln 4a,b des zweischenkligen Lagerbocks 4 Laufschalen 10a,b vorgesehen, die von die Lagerschenkel 4a,b verbindenden Befestigungsbolzen 11, 12 gehalten werden und eine zylindrische Rolle 13 aus gehärtetem Stahl tragen. Die Laufschalen 10a,b weisen eine konkave Lauffläche 14 auf, auf der die Rolle 13 verschiebbar ist. Die Krümmung der Lauffläche 14 ist hierbei größer als die bei einem Verschwenken der Halteleiste 3 um die Schwenkachse 6 von der Bodenfläche 15 der Halteleiste 3 zurückgelegte Kreisbahn. In der Bodenfläche 15 der Halteleiste 3 sind Verformungsnasen 16 vorgesehen, die die Rolle 13 bei einem Auslenken aus der mittleren Ruheposition klemmen können.

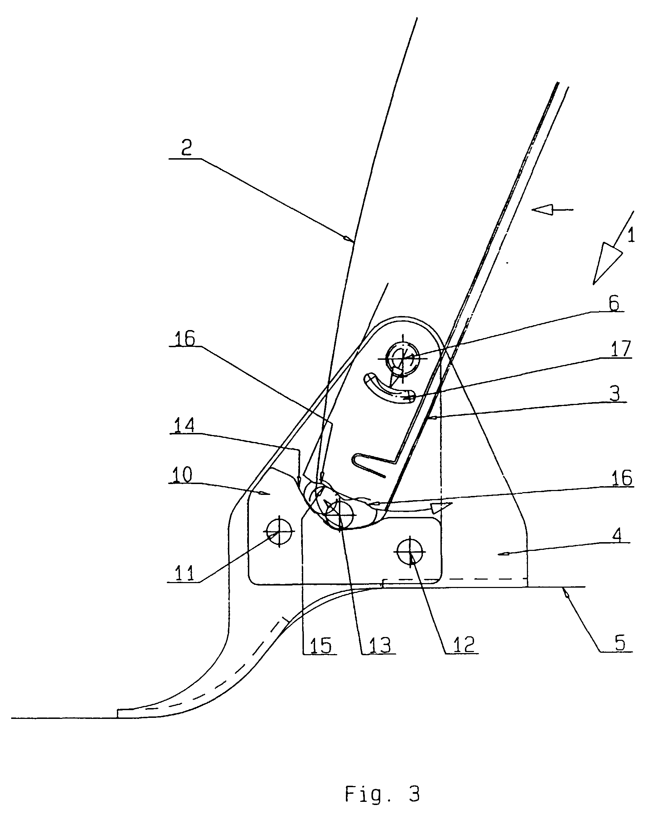

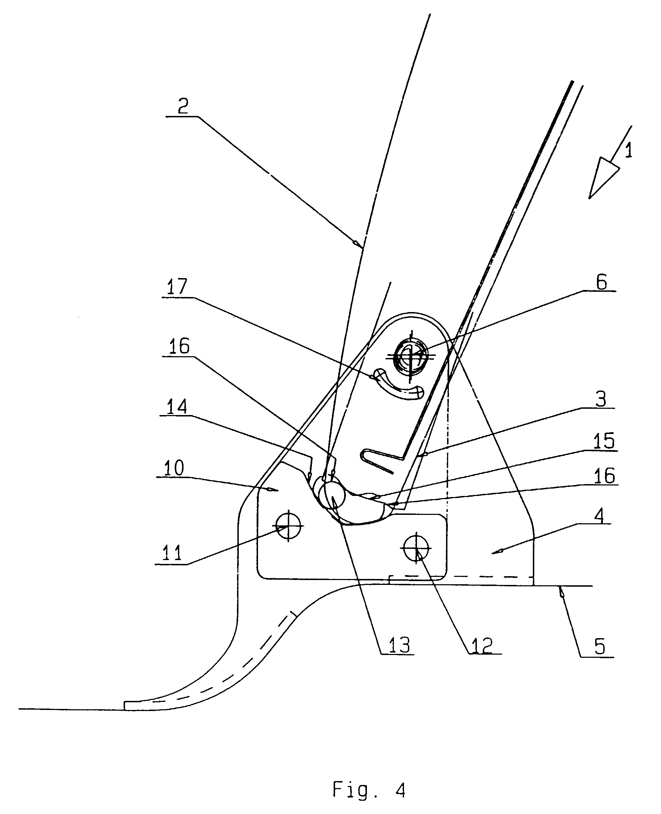

In der Verstärkung 7 ist eine in den Fig. 3 und 4 gestrichelt angedeutete Freimachung oder Ausnehmung 17 vorgesehen, in der die Rolle 13 geführt ist. Hierdurch wird die Rolle 13 gegen ein Herausfallen aus den Lagerschalen 10a,b gesichert.

Unter Bezugnahme auf die Fig. 1 bis 4 wird nun die Funktion der Crash-Verriegelung 1 beschrieben.

In dem in Fig. 1 dargestellten Ruhezustand ist die Rückenlehne 2 an ihren oberen Seitenabschnitten an den Fahrzeugseitenwänden in herkömmlicher Weise verriegelt. Zum Umklappen der Rückenlehne 2 werden die hier nicht dargestellten oberen Verriegelungen gelöst und die Rückenlehne 2 mit der Halteleiste 3 um die Schwenkachse 6 verschwenkt, wobei die Bodenfläche 15 der Halteleiste 3 an der Rolle 13 in den Laufschalen 10a,b vorbeischwenkt.

Geschieht nun ein Unfall (Crash), so bewegt sich die Rolle 13 aufgrund der Massenträgheit in der in Fig. 3 durch einen Pfeil markierten Richtung entlang der Lauffläche 14 der Laufschalen 10a,b. Die Bodenfläche 15 der Halteleiste 3 bewegt sich aufgrund der Umlenkung über die Schwenkachse 6 dagegen in die entgegengesetzte Richtung, wobei sich der Abstand der Bodenfläche 15 der Halteleiste 3 und der Rolle 13 aufgrund der unterschiedlichen Krümmungen der Lauffläche 14 und der Kreisbahn der Bodenfläche 15 verringert. Die Rolle 13 rutscht aufgrund der Fliehkraft in die in Fig. 4 dargestellte ausgelenkte Position, in der sie teilweise von der Verformungsnase 16 der Halteleiste 3 aufgenommen ist. Die Bodenfläche 15 der Halteleiste 3 liegt hierbei ggf. teilweise verformt an der Rolle 13 an, so daß ein Verschwenken der Halteleiste 3 um die Schwenkachse 6 durch die Rolle 13 blockiert wird. Eine entsprechende Blockierung erfolgt bei einem Heck-Crash, bei welchem sich die Rolle 13 auf der Lauffläche 14 nach hinten bewegt und die Bodenfläche 15 der Halteleiste 3 nach vorne um die Schwenkachse 6 schwenken will. Auch hier wird somit eine zuverlässige Verriegelung der Rückenlehne 2 erreicht.

Sollte es aufgrund der Wucht des Crashes zu einer Verformung des Verriegelungssystems kommen, so wird eine zielgerichtete Verformung durch den Freischnitt 8 der Verstärkung und Freischnitte 18 in den Lagerschenkeln 4a,b vorgegeben. Die gehärtete Rolle 13 drückt sich in die verformbare Bodenfläche 15 der Halteleiste 3 ein.

### Bezugszeichenliste:

- 1: Crash-Verriegelung
- 2: Rückenlehne
- 3: Halteleiste
- 3a,b: Halteleistenschenkel
- 4: Lagerbock
- 4a,b: Lagerschenkel
- 5: Fahrzeugboden
- 6: Schwenkachse
- 7: Verstärkung
- 8: Freischnitt
- 9a,b: Durchstellung
- 10a,b: Laufschale
- 11: Befestigungsbolzen
- 12: Befestigungsbolzen
- 13: Rolle
- 14: Lauffläche
- 15: Bodenfläche
- 16: Verformungsnasen
- 17: Ausnehmung
- 18: Freischnitt

## Patentansprüche

1. Crash-Verriegelung, insbesondere für umklappbare Rückenlehnen (2) von Kraftfahrzeugen, wobei die Rückenlehne (2) an ihren oberen freien Seitenabschnitten lösbar an den Fahrzeugseitenwänden verriegelbar ist und wenigstens eine die Rückenlehne (2) tragende Halteleiste (3) aufweist, die über einen Lagerbock (4) oder dgl. an dem Fahrzeugboden (5) befestigt und mit der Rückenlehne (2) um eine Schwenkachse (6) gelenkig gegenüber dem Lagerbock (4) verschwenkbar ist, **dadurch gekennzeichnet,** daß an dem Lagerbock (4) Laufschalen (10a,b) vorgesehen sind, in denen eine Rolle (13) verschiebbar aufgenommen ist, daß die Rolle (13) sich bei einer Bewegungsänderung des Fahrzeugs aufgrund der Massenträgheit innerhalb der Laufschalen (10a,b) verschiebt, und daß der Abstand zwischen der Halteleiste (3) und den Laufschalen (10a,b) so gewählt ist, daß die Halteleiste (3) im Ruhezustand an der Rolle (13) vorbeischwenken kann und daß die Halteleiste (3) mit einer Bodenfläche (15) an der Rolle (13) anschlägt, wenn die Rolle (13) in den Laufschalen (10a,b) aus ihrer Ruheposition verschoben ist.

2. Crash-Verriegelung nach Anspruch 1, **dadurch gekennzeichnet,** daß die Rolle (13) aus gehärtetem Stahl besteht.

3. Crash-Verriegelung nach Anspruch 1 oder 2, **dadurch gekennzeichnet,** daß die Laufschalen (10a,b) eine konkave Lauffläche (14) aufweisen, auf der die Rolle (13) verschiebbar ist.

4. Crash-Verriegelung nach Anspruch 3, **dadurch gekennzeichnet,** daß die Lauffläche (14) eine stärkere Krümmung aufweist als die bei einem Verschwenken der Halteleiste (3) von der Bodenfläche (15) der Halteleiste (3) zurückgelegte Kreisbahn.

5. Crash-Verriegelung nach einem der Ansprüche 1 bis 4, **dadurch gekennzeichnet,** daß die Halteleiste (3) zweischenklig ausgebildet ist und eine Verstärkung (7) mit Halteleistenschenkeln (3a,b) beidseitig umgreift.

6. Crash-Verriegelung nach Anspruch 5, **dadurch gekennzeichnet,** daß die Verstärkung (7) eine Ausnehmung (17) zum Führen der Rolle (13) aufweist.

7. Crash-Verriegelung nach Anspruch 5 oder 6, **dadurch gekennzeichnet,** daß die Verstärkung (7) im Bereich der Schwenkachse (6) einen Freischnitt (8) aufweist.

8. Crash-Verriegelung nach einem der Ansprüche 1 bis 7, **dadurch gekennzeichnet,** daß in der Bodenfläche (15) der Halteleiste (3) Verformungsnasen (16) zur Aufnahme der Rolle (13) in deren ausgelenkter Position ausgebildet sind.

9. Crash-Verriegelung nach einem der Ansprüche 1 bis 8, **dadurch gekennzeichnet,** daß der Lagerbock (4) zweischenklig ausgebildet ist und die Halteleiste (3) und die Laufschalen (10a,b) mit Lagerschenkeln (4a,b) beidseitig umgreift.

10. Crash-Verriegelung nach Anspruch 9, **dadurch gekennzeichnet,** daß in den Lagerschenkeln (4a,b) Freischnitte (18) vorgesehen sind.

11. Crash-Verriegelung nach Anspruch 9 oder 10, **dadurch gekennzeichnet,** daß die Lagerschenkel (4a,b) über Befestigungsbolzen (11, 12) miteinander verbunden sind, die die Laufschalen (10a,b) und die Verstärkung (7) tragen.
